# EUROPEAN PATENT SPECIFICATION

(11) **EP 3 792 486 B1**
(45) Date of publication and mention of the grant of the patent: **18.02.2026**
(21) Application number: 19197475.7
(22) Date of filing: 16.09.2019
(51) Int. Cl.: F03D 13/10, B66C 23/52

(54) **METHOD OF OFFSHORE MOUNTING A WIND TURBINE**
VERFAHREN ZUR OFFSHORE-MONTAGE EINER WINDTURBINE
PROCÉDÉ DE MONTAGE D'UNE ÉOLIENNE EN MER

(43) Date of publication of application: 17.03.2021
(73) Proprietor: Siemens Gamesa Renewable Energy A/S, 7330 Brande (DK)
(72) Inventor: Soerensen, Johnny, 6920 Videbæk (DK); Skjaerbaek, Poul, 6920 Videbaek (DK)
(74) Representative: SGRE-Association

(56) References cited:
- EP-A1- 3 561 201
- EP-A2- 2 910 686
- WO-A1-03/100178
- WO-A1-2010/139725
- WO-A1-2018/070868
- WO-A1-2018/228809
- WO-A1-2021/040516
- WO-A2-2009/080035
- WO-A2-2010/006602
- US-A1- 2019 186 465
- US-A1- 2021 246 878
- ANONYMOUS: "The art of balancing wind turbines | Topsector Energie", 9 September 2019 (2019-09-09), XP055676033, Retrieved from the Internet <URL:https://www.topsectorenergie.nl/en/nieuws/art-balancing-wind-turbines> [retrieved on 20200312]
- ANONYMOUS: "First offshore wind turbine using the Slip Joint connection successfully installed | Topsector Energie", 30 September 2018 (2018-09-30), XP093005908, Retrieved from the Internet <URL:https://www.topsectorenergie.nl/nieuws/first-offshore-wind-turbine-using-slip-joint-connection-successfully-installed> [retrieved on 20221207]

## Description

### Field of invention

The present invention relates to a method of offshore mounting a wind turbine.

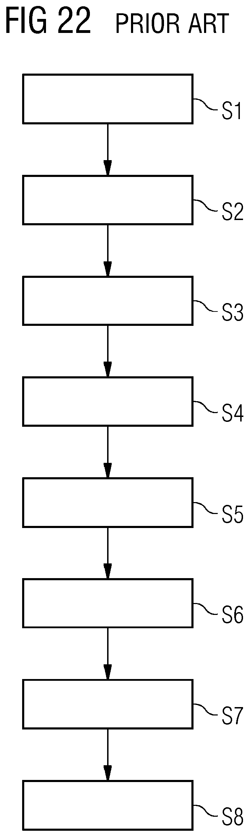

**Fig. 22** shows a flowchart of a conventional method of off-shore mounting a wind turbine according to the prior art. In a step S1, a monopile is mounted to a sea ground by use of a jack-up vessel. In a step S2, a transition piece is mounted to the top of the monopile by means of the jack-up vessel. In a step S3, the transition piece is grouted by use of the jack-up vessel. In a step S4, the grout is cured for a certain time. In a step S5, a tower is mounted to the transition piece by use of the jack-up vessel. In a step S6, a nacelle is mounted to the top of the tower by use of the jack-up vessel. In a step S7, a hub of the nacelle is rotated by a hub turning tool and by use of the jack-up vessel to a position at which a blade can be mounted in a horizontal orientation. In a step S8, the blade, which is suspended on a crane of the jack-up vessel, is mounted to the hub of the nacelle.

For other offshore foundations, the steps after mounting the foundation are similar, but the installation of alternative foundations is likewise time consuming as they require a step of preparing the sea ground prior to mounting the foundation and a step of providing jacket structures and a step of additionally securing the jacket structures to the sea ground. Recently, a project (SJOR (slip joint offshore research)) was conducted by a number of Dutch partners from industry and academia. The project was government funded and focused on the connection between foundation monopiles and wind turbines. In this project an offhore wind turbine was placed from a floating vessel on top of a monopile foundation, using a slip joint.

Another issue pertaining to wind turbine installations occurs during the placement of the nacelle on the top tower section. The tower is connected to a yaw or a bedframe of the nacelle. However the canopy and/or the support skeleton of the nacelle often extends well below this attachment point, and accordingly, the nacelle must be lifted up much higher above the tower, placed at the right position and eventually lowered down to mate the nacelle with the tower. This additional lifting height to meet the required clearance can be quite high which increases the complexity of the installation and also the requirement of a lifting crane.

**Fig. 23** shows the use of a jack-up vessel during mounting a foundation according to the prior art. A crane lifts up a monopile, the monopile is hammered into the sea ground, the transition piece is mounted to the top of the monopile, and the transition piece is grouted.

**Fig. 24** shows the use of a jack-up vessel during mounting a tower according to the prior art, and **Fig. 25** shows the use of a jack-up vessel during mounting a nacelle according to the prior art. After the nacelle is mounted to the tower, the single blades are mounted to the hub of the nacelle.

It is the object of the present invention to provide a method of offshore mounting a wind turbine, which is faster, simpler and less cost expensive.

### Summary of the Invention

This object is achieved by the subject matter according to the independent claim. The present invention is further developed as set forth in the dependent claims.

A main aspect of the invention is directed to a method of offshore mounting a wind turbine, wherein the wind turbine comprising a foundation such as a monopile, a tower, a nacelle and a plurality of blades. The method comprising steps of: a) mounting the foundation on or above a sea ground; b) mounting the tower to the foundation; c) mounting the nacelle to the tower; and d) mounting the plurality of blades to the nacelle. At least one of the steps a) through c), preferably two steps such as a) and b), most preferred all of steps a) to c), is performed by use of at least one floating vessel which is exclusively supported by buoyancy when performing the at least one of the steps a) through c).

In the context of the present invention, the term "exclusively supported by buoyancy" includes also an application where a jack-up vessel is used which, however, does not use the jack-up legs for supporting the jack-up vessel during the at least one of the steps a) through c). In this meaning, the jack-up vessel can also be operated as a floating vessel.

The present invention offers many advantages. It is to be noted that the conventional use of the jack-up legs is very time consuming. The floating vessels, which are used in the present invention, are so called "vessels for purpose" that means the vessels only need the respective properties to fulfil the intended step a) to c). The floating vessel or barge can make a so called "float over" installation of the foundation such as the monopile or/and the tower. This measure is a faster, simpler and more cost optimized installation method. The vessel capacity can be increased as no heavy lift at maximum height is performed except for a later described gripper tool, if any, which can carry out a heavy lift.

In addition, the installation time is faster, and the installation scheduling can be optimized with regard to weather conditions. Less vessels and less crew are required to install the wind turbine which results in less risks of mistakes and failures. The present invention is more cost efficient, and no or limited maintenance on the tower are required during the wind turbine installation.

In an embodiment, different floating vessels having different water displacements are used in at least some of the steps a) through d). In other words, each step can use a different and dedicated floating vessel.

In an embodiment, the method comprises a step of attaching an adaptor to the nacelle prior to step c). Accordingly, the nacelle is provided with a tower adaptor prior to nacelle installation, wherein the adaptor preferably comprises internal structures that are placed on the tower.

In an embodiment, the method further comprising a step f) of mounting a transition piece between the foundation and the tower. Thereby, standard foundations can be used for different towers or standard towers can be used for different foundations.

In an embodiment, an array of wind turbines is mounted, wherein the at least one floating vessel performs only a subset of steps a) through d) for each wind turbine of the array. That means, the floating vessel does not have to perform all steps a) through d) for each wind turbine of the array.

In an embodiment, the floating vessel, which is at least used in one of steps a) to c), comprises a gripper tool and/or a crane. The gripper tool can be used to install monopiles. The tool can pick up the monopile on deck and lower the same to a target position, and thereafter a crane can support a hammer for the installation, i.e. for hammering the foundation. The crane support is only necessary for the hammer.

In an embodiment, step b) is either performed by horizontal and vertical positioning the tower by means of the gripper tool or crane to a position at which the tower can be mounted to the foundation; or moving the floating vessel for horizontally positioning the tower to a horizontal position at which the tower can be mounted to the foundation, and, during maintaining the horizontal position of the floating vessel, vertically moving the tower by means of the gripper tool or crane to a position at which the tower can be mounted to the foundation.

In an embodiment, the gripper tool or the crane and the floating vessel communicate which each other for moving the gripper tool or crane in a horizontal direction to compensate for a horizontal shift of the floating vessel, e.g. due to waves, wind, etc.; and/or controlling a positioning system of the floating vessel by the gripper tool or the crane. This communication of the gripper tool or the crane for example with the digital position system of the floating vessel facilitates the use of the floating vessels which can be slightly moved due to waves, wind, etc.

In an embodiment, the tower has a first tube which is mounted to the foundation having a second tube by use of a slip-joint interface, wherein one of first and second tubes has a diameter which is larger than a diameter of the other one of the first and second tubes, wherein the one of the first and second tubes having the larger diameter is put over and guided by the other one of the first and second tubes. Preferably, the first and second tubes are cone-shaped or tapered. Such a slip joint allows larger tolerances so that the use of floating vessel, which can be slightly moved due to waves, wind, etc., can be facilitated.

According to the invention the nacelle has a first tube which is mounted to the tower having a second tube by use of a slip-joint interface, wherein one of first and second tubes has a diameter which is larger than a diameter of the other one of the first and second tubes, wherein the one of the first and second tubes having the larger diameter is put over and guided by the other one of the first and second tubes. Preferably, the first and second tubes are cone-shaped or tapered. Such a slip joint allows larger tolerances so that the use of floating vessel, which can be slightly moved due to waves, wind, etc., can be facilitated.

The method can be used for all foundation types such as gravity foundations, jacket foundations and/or floating foundations. There are benefits on a crane less installation of the tower and a floating crane operation of the nacelle and the blades.

In an embodiment, the foundation is a floating foundation, and the gripper tool or crane determines a floating vessels digital position under installation and targets at a point on a floating foundation to follow movements of the floating foundation.

In an embodiment, the foundation is a floating foundation, and the gripper tool holds and controls the floating foundation under installation of the wind turbine.

In an embodiment, the foundation is a gravity foundation, and the gripper tool handles the gravity foundation and places the same on the sea ground.

In an embodiment, step a) is performed when at least the tower is already mounted to the foundation. Optionally, the nacelle and even the blades can also be mounted in advance.

In summary, the installation process can optionally be performed with a tower adaptor such as the slip joint or a flange as an interface, for example for the installation of the tower to the foundation such as a monopile or another off-shore foundation type (gravity, jacket, tripod etc.). The method is faster than traditional methods since the individual steps are performed using floating vessels which are preferably dedicated for only one task which can then significantly reduce the operation time compared to known methods, e.g. conventional jack-up vessels require several hours for the jack-up process (jack-up and pre-loading of jack-up legs) before the installation of the individual components that constitute a complete wind turbine.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

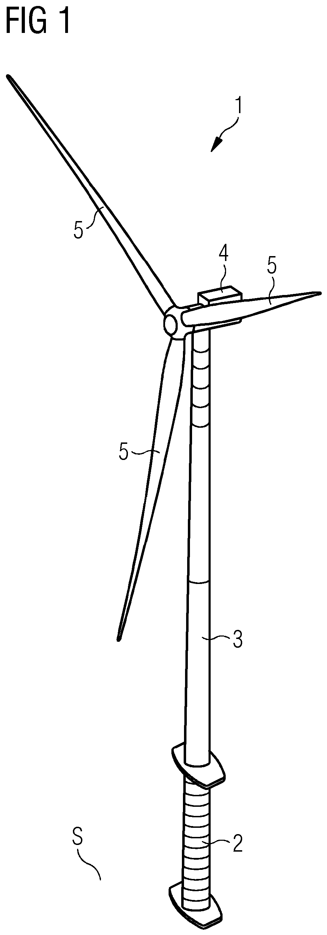

- Fig. 1: shows a wind turbine;

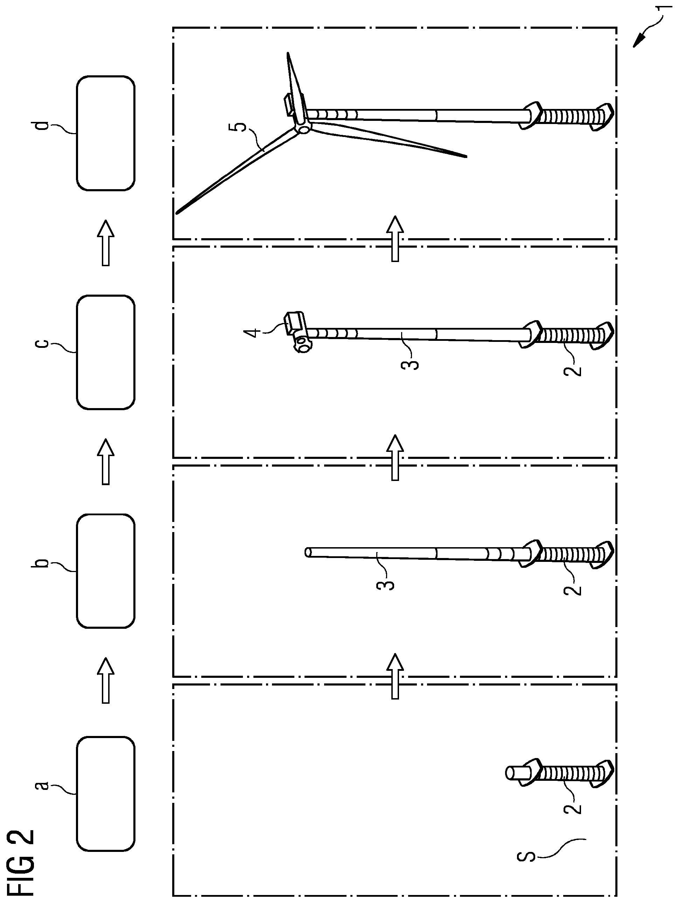

- Fig. 2: shows flowchart comprising steps of a method of off-shore mounting a wind turbine according to an embodiment of the present invention;

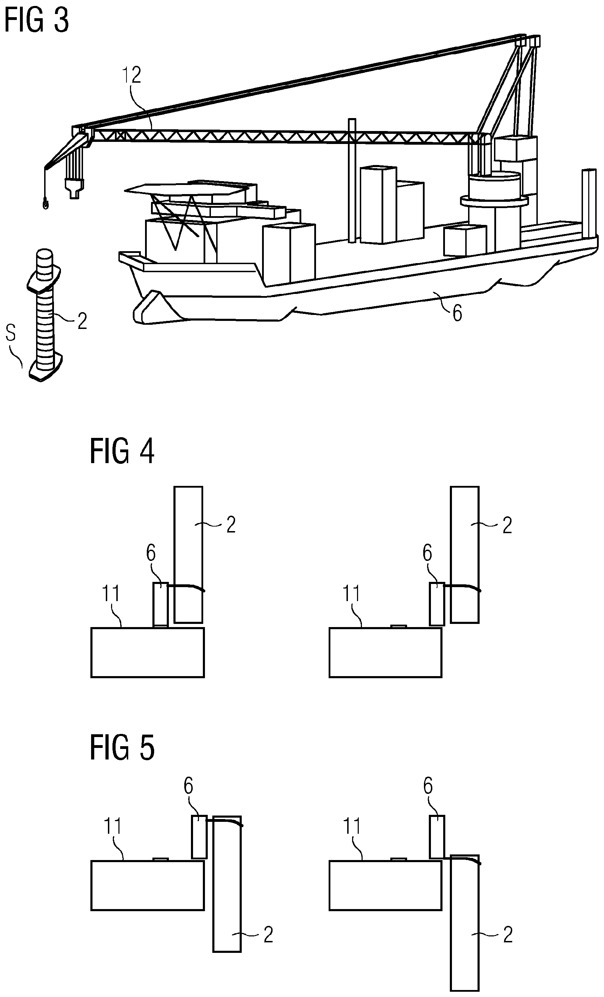

- Fig. 3: shows the use of a floating vessel during mounting a foundation according to an embodiment;
- Fig. 4: shows the use of a gripper tool during mounting a foundation according to an embodiment;
- Fig. 5: shows the use of a gripper tool during mounting a foundation according to an embodiment;

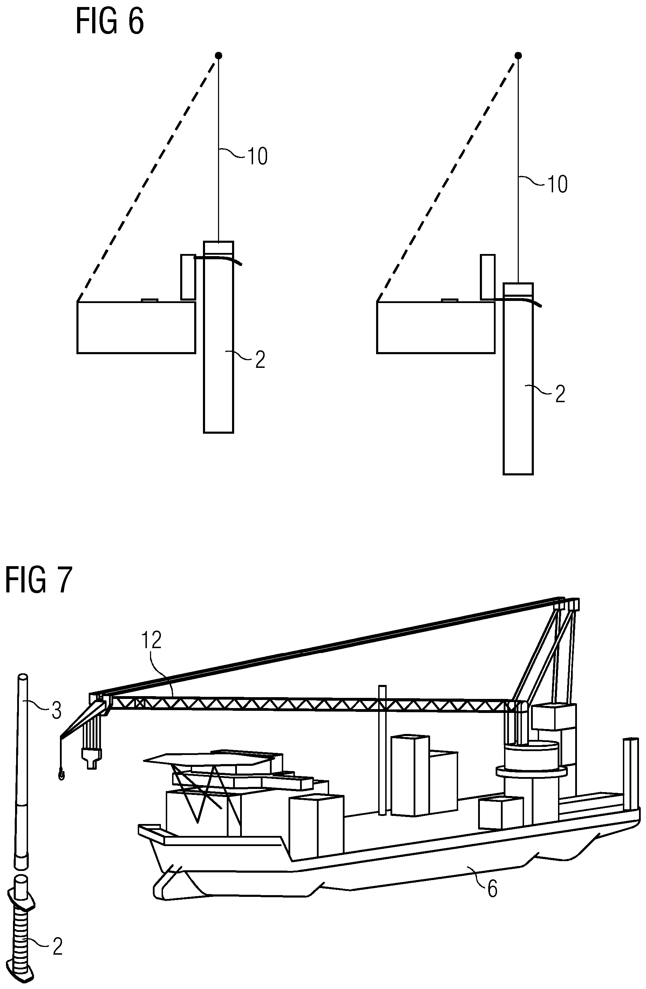

- Fig. 6: shows the use of a hammering tool during mounting a foundation according to an embodiment;
- Fig. 7: shows the use of a floating vessel during mounting a tower according to one embodiment;

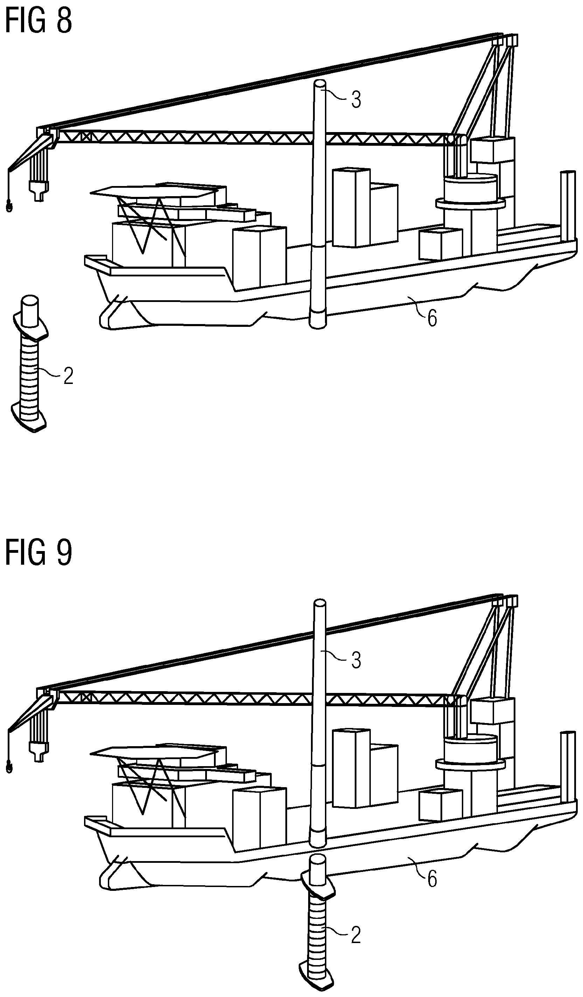

- Fig. 8: shows the use of a floating vessel during mounting a tower according to another embodiment;
- Fig. 9: shows the use of a floating vessel during mounting a tower according to the other embodiment;

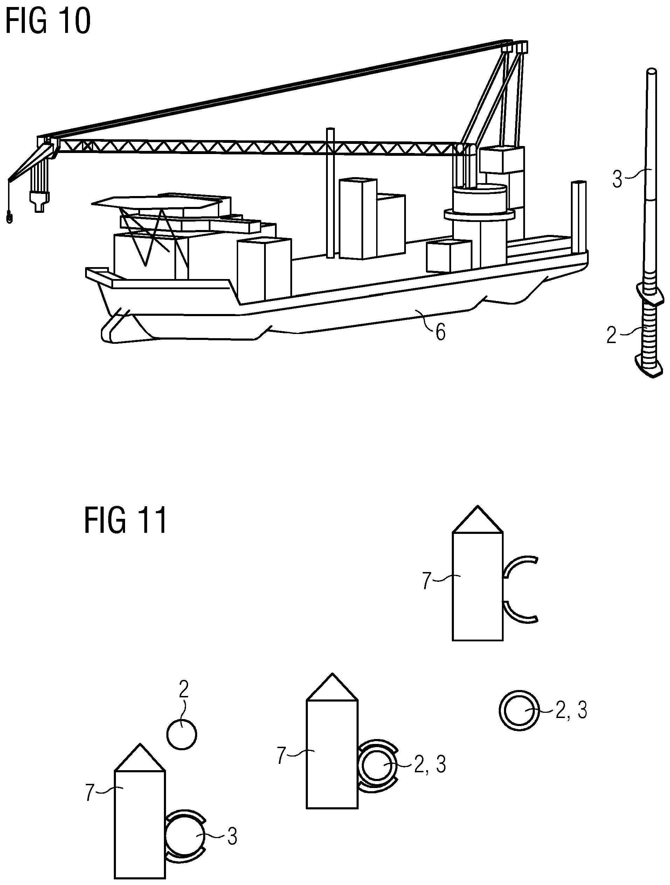

- Fig. 10: shows the use of a floating vessel during mounting a tower according to the other embodiment;
- Fig. 11: shows the use of a gripper tool during mounting a tower according to an embodiment;

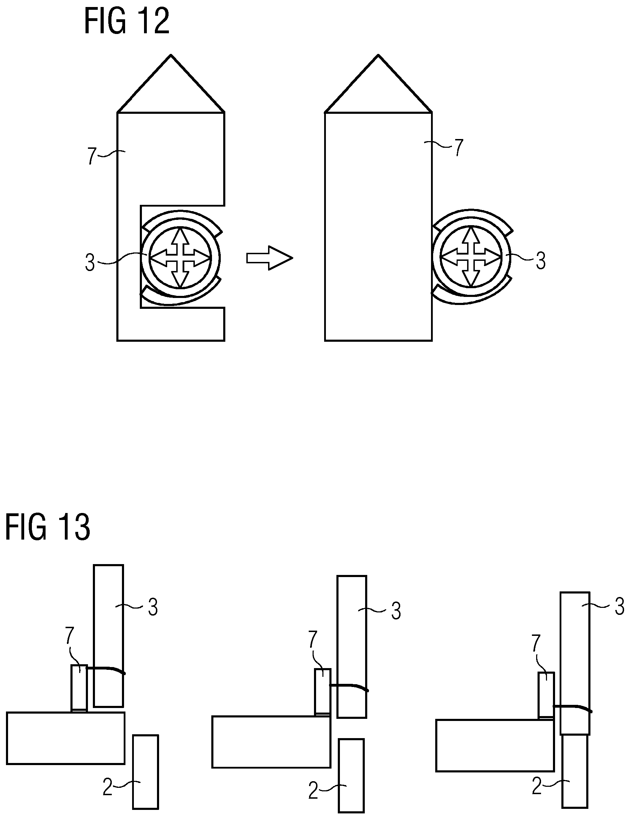

- Fig. 12: shows the use of a gripper tool during mounting a tower according to an embodiment;
- Fig. 13: shows the use of a gripper tool during mounting a tower according to an embodiment;

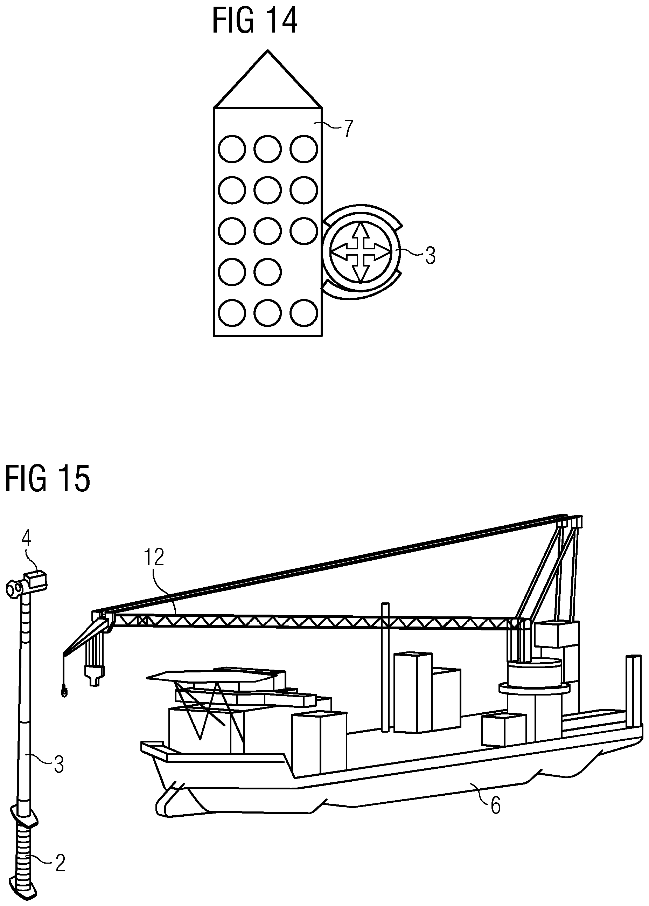

- Fig. 14: shows the use of a gripper tool during mounting a tower according to an embodiment;
- Fig. 15: shows the use of a floating vessel during mounting a nacelle according to an embodiment;

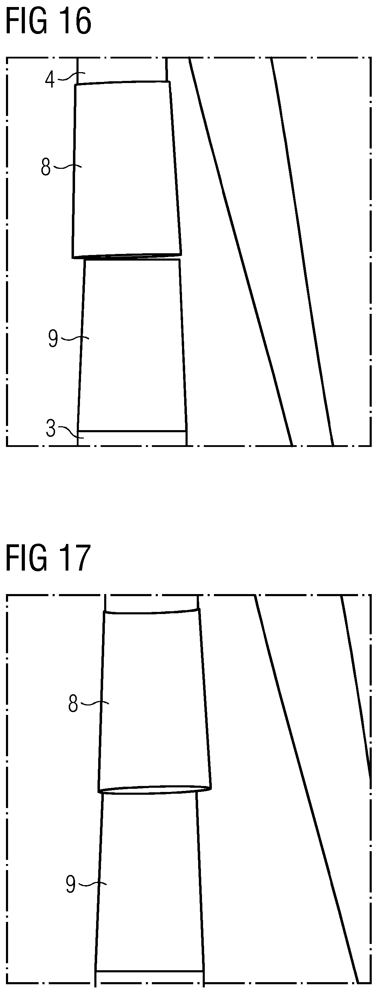

- Fig. 16: shows a step of mounting the nacelle by means of a slip-joint interface according to an embodiment;
- Fig. 17: shows a step of mounting the nacelle by means of the slip-joint interface according to the embodiment;

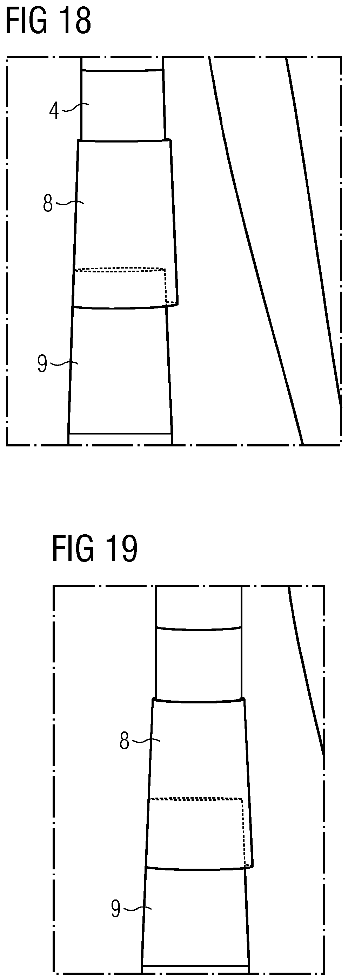

- Fig. 18: shows a step of mounting the nacelle by means of the slip-joint interface according to the embodiment;
- Fig. 19: shows a step of mounting the nacelle by means of the slip-joint interface according to the embodiment;

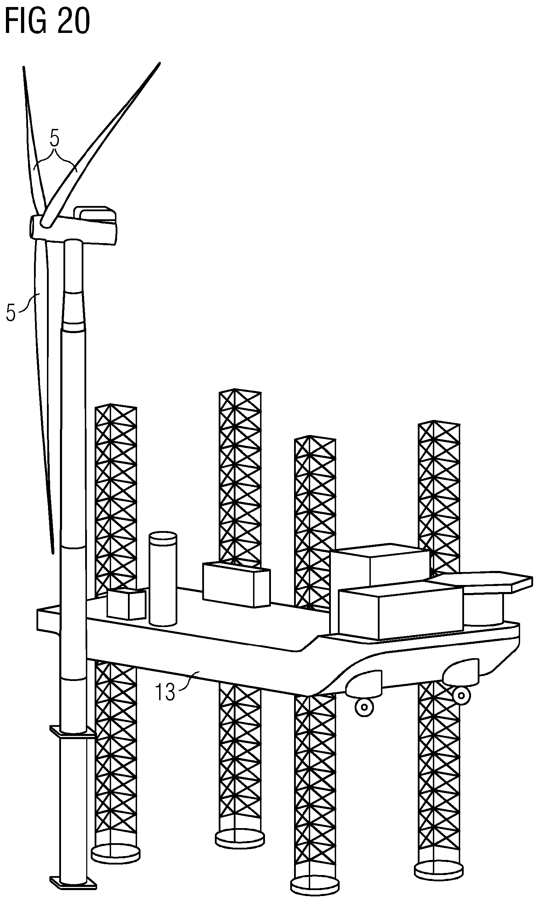

- Fig. 20: shows the use of a jack-up vessel during mounting a blade according to an embodiment;

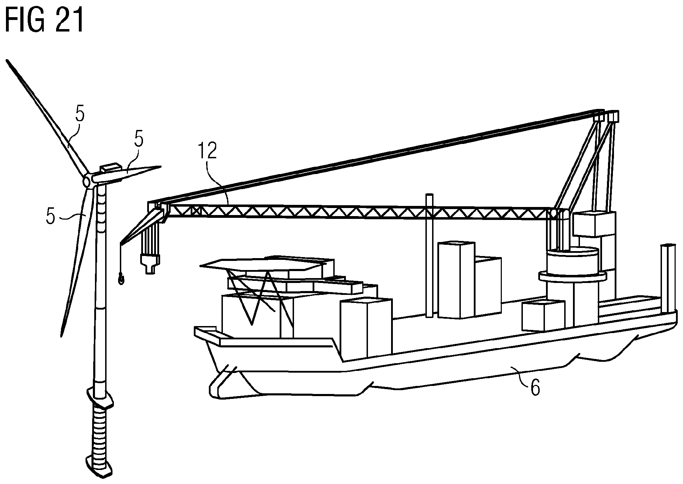

- Fig. 21: shows the use of a floating vessel during mounting a blade according to another embodiment;
- Fig. 22: shows a flowchart of a conventional method of off-shore mounting a wind turbine according to the prior art;

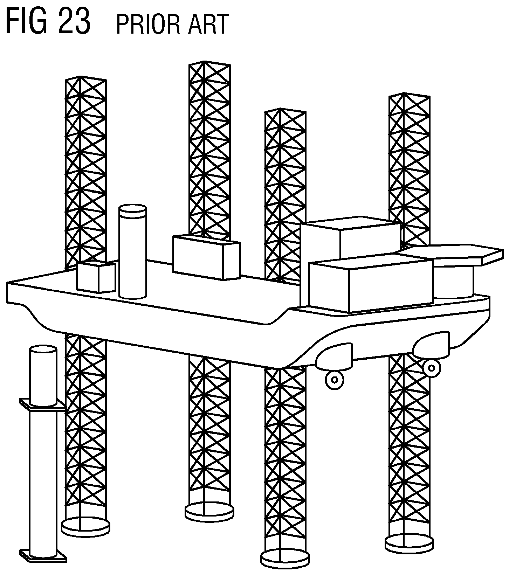

- Fig. 23: shows the use of a jack-up vessel during mounting a foundation according to the prior art;

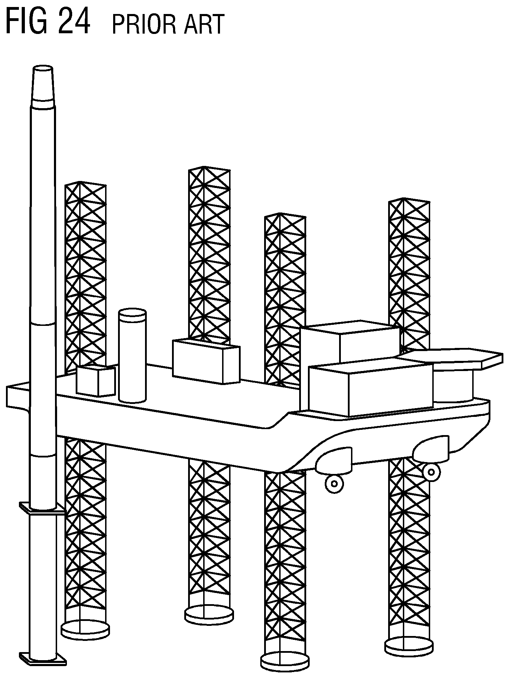

- Fig. 24: shows the use of a jack-up vessel during mounting a tower according to the prior art; and

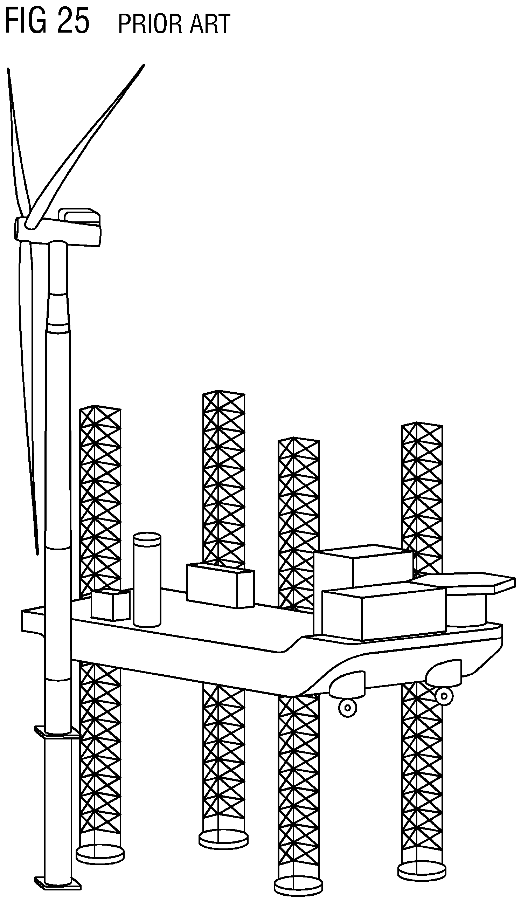

- Fig. 25: shows the use of a jack-up vessel during mounting a nacelle according to the prior art.

### Detailed Description

The illustrations in the drawings are schematically. It is noted that in different figures, similar or identical elements are provided with the same reference signs.

Fig. 1 shows a wind turbine 1. The wind turbine 1 comprises a foundation 2 mounted to a sea ground S, a tower 3, a nacelle 4 and a plurality of blades 5, for example three blades 5.

The tower 3 is mounted to the top of the foundation 2, and the nacelle 4 is mounted to the top of the tower 3. The nacelle 4 is mounted rotatable with regard to the tower 3 by means of a yaw bearing. The plurality of blades 5 is mounted to the nacelle 4 by means of a rotatable hub.

The wind turbine 1 furthermore comprises a generator to convert the rotational energy from the hub into electrical energy in the shape of an AC power.

Fig. 2 shows flowchart comprising steps of a method of off-shore mounting a wind turbine 1 according to an embodiment of the present invention. The method comprising steps of: a) mounting the foundation 2, for example a monopile, on a sea ground S; b) mounting the tower 3 to the foundation 2; c) mounting the nacelle 4 to the tower 3; and d) mounting the plurality of blades 5 to the nacelle 4. At least one of the steps a) through c) is performed by use of at least one floating vessel 6 (see Fig. 3), i.e. the vessel 6 is exclusively supported by buoyancy. In particular, the vessel 6 is not a jack-up vessel.

The tower 3 comprises a main tower section, which can be mounted and connected to the top of the foundation 2 in step b) using either a bolted connection, a slip-joint connection or any other connection that preferably does not require a service maintenance to secure the connection. The nacelle 4, optionally with a tower adaptor, can be mounted and connected to the top of the main tower section in step c) using either a bolted connection, a slip-joint connection or any other connection that preferably does not require service maintenance to secure the connection. The blades 5 can be mounted to the hub of the nacelle 4 in step d) either by use of a smaller jack-up vessel or a floating vessel depending on the weather conditions.

After performing steps a) to d), array cables of a wind farm can be connected to the wind turbine 1.

Preferably, two steps such as steps a) and b) are performed by use of at least one floating vessel 6, most preferred steps a) to c) are performed by use of at least one floating vessel 6. The floating vessels 6 used in steps a) to c) can be different floating vessels 6, or one and the same floating vessel 6 is used in at least two of steps a) to c).

Different floating vessels 6 having different water displacements can be used in at least some of the steps a) through d), i.e. the floating vessel 6 in one of the steps a) to d) can have another size to have another water displacement than a floating vessel 6 which is used in another one of the steps a) to d). The floating vessels 6 used in at least some of the steps a) to d) can be dedicated and equipped for the individual step a) to d) only.

In a wind farm, an array of wind turbines 1 is mounted, wherein the at least one floating vessel 6 can perform only a subset of steps a) through d) for each wind turbine 1 of the array. That means, the at least one floating vessel 6 does not perform all steps a) through d). Thus, when installing multiple wind turbines 1 in the wind farm, the installation time will be significantly reduced compared to a jack-up system that is very time consuming.

Fig. 3 shows the use of a floating vessel 6 during mounting a foundation 2 according to an embodiment. The foundation 2 can be installed using well-established procedures, in particular by use of a floating vessel 6. For example, a monopile 2 can be lifted by a crane 12, and the foundation 2 can be hammered into the sea ground S. Here, the floating vessel 6 can mount the foundation 2 in a digital position status, i.e. the floating vessel 6 can use a digital position system such as GPS to control the position of the floating vessel 6 during the mounting process. The crane 12 or also a later described gripper tool 7 and the floating vessel 6 can communicate which each other for moving the crane 12 or gripper tool 7 in a horizontal direction to compensate for a horizontal shift of the floating vessel 6, e.g. due to waves, wind, etc., and/or for controlling a positioning system of the floating vessel 6 by the crane 12 or the gripper tool 7. This saves on installation time, and no jack-up vessel is needed.

**Fig.** 4 shows the use of a gripper tool 6 during mounting a foundation 2 according to an embodiment. The foundation 2 such as a monopile is moved from a deck 11 of the floating vessel 6 to a mounting position, i.e. the gripper tool 6 moves the foundation 2 from a transport position on the deck 11 of the floating vessel 6 to a mounting position. The foundation 2 is lifted and transported to a position next to the deck 11 of the floating vessel 6. The gripper tool 6 may also be designed to be used for other foundation structures such a jacket structures, tripod structures and gravity structures. Thus, the present invention also encompasses other foundation types than monopiles.

**Fig.** 5 shows the use of a gripper tool 6 during mounting a foundation 2 according to an embodiment. The foundation 2 is moved from a deck level to a mounting position at the sea ground S. The gripper tool 6 lowers the foundation 2 from a deck level to a mounting position at sea ground level.

**Fig.** 6 shows the use of a hammering tool 10 during mounting a foundation 2 according to an embodiment. In a piling process, the hammer tool 10 is put on top of the foundation 2 to start the piling process, i.e. hammering the foundation 2 into the sea ground S. Only a support from a small crane 12 on the floating vessel 6 is needed to carry the hammer tool 10 from the deck 11 to the top of the foundation 2. There is no need of a heavy lift for the hammer tool 10, i.e. also the gripper tool 6 can be used for that purpose. The gripper tool 6 may also be used for installation of a transition piece (not shown) if desired, but the transition piece is optional, and the tower 3 may directly be connected to the foundation 2.

**Fig.** 7 shows the use of a floating vessel 6 during mounting a tower 3 according to one embodiment. The floating vessel 6 is equipped with a crane 12. Preferably, the tower 3 is shipped in full height after having been pre-assembled at a harbor site. Alternatively, the tower 3 can consist of a main part and sub parts which are assembled on the floating vessel 6.

Basically, step b) in the embodiment of Fig. 7 is performed by horizontal and vertical positioning the tower 3 by means of the crane 12 or gripper tool 7 to a position at which the tower 3 can be mounted to the foundation 2.

In the embodiment of Fig. 7, once the foundation 2 has been placed, the tower 3 is connected to the foundation 2. Optionally, in a step f) which is not shown, a transition piece can be mounted between the foundation 2 and the tower 3. The floating vessel 6 for this purpose would again reduce the installation time compared to the conventional use of a jack-up vessel. To further reduce the installation time, the connection between the foundation 2 (or alternatively the transition piece) to the tower 3 may utilize a slip-joint interface or other type of connection (e.g. a screw connection that establish a secure fastening between the two structures) that does not require service maintenance to secure the connection. This will also increase the safety during the installation. The slip-joint interface is later described with reference to Figures 16-19.

**Figures 8 to 10** show the use of a floating vessel 6 during mounting a tower 3 according to another embodiment. The embodiment of Figures 8 to 10 realizes a so called float over installation, where the tower 3 is positioned in pile and a gripper tool 7 (see Figures 11-14) holds the tower 3 under transport. The illustrated foundation 2 is a monopile, but it can also be a gravity foundation, a jacket foundation and/or a floating foundation. The tower 3 can be transported on deck to the gripper tool 7 with a SPMT (self-propelled modular transporter) or similar. The gripper tool 7 can access and lift the tower 3 from the deck and move it outside the vessel side, and it can move the tower 3 up and down for installation. Basically, step b) in the embodiment of Figures 8 to 10 is performed by moving the floating vessel 6 for horizontally positioning the tower 3 to a horizontal position at which the tower 3 can be mounted to the foundation 2, and, during maintaining the horizontal position of the floating vessel 6, by vertically moving the tower 3 by means of the gripper tool 7 or a crane 12 to a position at which the tower 3 can be mounted to the foundation 2.

In Fig. 8, the tower 3 is placed in gripper tool 7 in an upper position. In Fig. 9, when the floating vessel 6 reached the desired position, where the floating vessel 6 is in a correct position to allow the tower 3 to be placed on the foundation 2 such as a monopile or any other foundation type including a floating platform which is pre-set to the intended location, the tower 3 in the gripper tool 7 is moved to a lower position.

In Fig. 10, the tower 3 has been placed on the foundation 2. The gripper tool 7 is disengaged and prepared for picking up the next tower 3. The floating vessel 6 is starting to a location for the next wind turbine installation.

Optionally, in a step f) which is not shown, a transition piece can be mounted between the foundation 2 and the tower 3.

Fig. 11 shows the use of a gripper tool 7 during mounting a tower 3 according to an embodiment. The foundation 2 can be a fixed foundation or a floating foundation. After having mounted the tower 3 to the foundation 2, the floating vessel 6 with the gripping tool 7 passes by.

Fig. 12 shows the use of a gripper tool 7 during mounting a tower 3 according to an embodiment. The gripper tool 7 can move in multiple directions, in particular in any direction within a horizontal plane. The tower 3 is installed in its position on top of the foundation 2 such as a monopile or a transition piece (not shown) or any other foundation type, and the tower 3 is lowered to be connected to the foundation 2. The gripper tool 7 can move the tower 3 in multiple directions to ensure the correct position for installation and compensate for movement if the floating vessel 6 moves, e.g. due to wave or wind influences. The gripper tool 7 can be linked to a digital position system of the floating vessel 6 and establish communication to control the floating vessel 6 under installation. Thereby, the installation can be optimized. Also, a ballast system of the floating vessel 6, if any, can be controlled by the gripper tool 7 for counteract movements. The gripper tool 7 and optionally other installation system controllers can have access to control the floating vessel 6 to make an optimized digital installation. In particular, movements of the floating vessel 6, forces from the gripper tool 7, distance measurements between the floating vessel 6, the foundation 2 and/or the tower 3 can be digitally tracked to realize a qualified and auto-generated installation documentation.

In summary, the crane 12 or the gripper tool 7 and the floating vessel 6 communicate which each other for moving the gripper tool 7 or crane 12 in a horizontal direction to compensate for a horizontal shift of the floating vessel 6, e.g. due to waves, wind, etc.; and/or for controlling a positioning system of the floating vessel 6 by the gripper tool 7 or the crane 12.

**Fig. 13** shows the use of a gripper tool 7 during mounting a tower 3 according to an embodiment. At the left-hand side of Fig. 13, the gripper tool 7 picks up the tower 3 on deck of the floating vessel 6. The tower 3 is lifted from a pickup point on deck. At the middle of Fig. 13, the gripper tool 7 moves to the side to a target positon above the foundation 2. At the right-hand side of Fig. 13, the tower 3 is lowered when it is in the target position.

**Fig. 14** shows the use of a gripper tool 7 during mounting a tower 3 according to an embodiment. The tower 3 on a deck of the floating vessel 6 is ready for installation, and the tower 3 can automatically be moved by the gripper tool 7 from the deck.

**Fig. 15** shows the use of a floating vessel 6 during mounting a nacelle 4 according to an embodiment. The installation of the nacelle 4, preferably with a tower adaptor, is made by use of a floating vessel 6 with a crane 12. Preferably, the nacelle 4 comprises the tower adaptor to allow a later described slip-joint connection interface with the tower 3. Alternatively, the nacelle 4 can comprise another type of connection that establish a guiding system when placing the nacelle 4 with the adaptor on the tower 3, i.e. a remote placement and connection that does not require the presence of a technician or service maintenance. The slip-joint interface between tower 3 and the tower-adaptor enables a larger tolerance to position the units on target. Also, a fast and reliable connection of the two structures is enabled.

**Figures 16 to 19** show steps of mounting the nacelle 4 by means of a slip-joint interface according to the invention.

Basically, in the slip-joint interface, the nacelle 4 has a first tube 8 which is mounted to the tower 3 having a second tube 9, wherein the first tube 8 has a diameter which is larger than a diameter of the second tube 9, wherein the first tube 8 having the larger diameter is put over and guided by the second tube 9. Preferably, at least one of the first and second tubed 8, 9 is cone-shaped or tapered. Preferably, the diameter of the first tube 8 is larger than the diameter of the second tube 9.

The slip-joint interface or any other guiding system enables an easier and much faster installation process compared to a bolted flange-to-flange connection which is the conventional standard. By use of the slip-joint interface, no service personal is required at the site of mounting the nacelle 4 to the tower 3. Thus, the slip-joint interface enables a safer approach.

In Fig. 16, the nacelle 4 with the adapter including the first tube 8 is positioned to the left of the tower 3 and can still be installed. The slip-joint interface 8, 9 is used as a guide under installation. No service technician has to be present. In Fig. 17, the nacelle 4 with the adapter including the first tube 8 is positioned to the right of the tower 3 and can still be installed. The conical design of tower 3 and the tower-adaptor in the slip joint interface 8, 9 realize a guidance function under installation and thus allows greater tolerances compared to conventional connections. In Fig. 18, the nacelle 4 is secured by the slip joint interface and automatically guided to its final position to mate to the tower 3. In Fig. 19, the nacelle 4 is secured by the slip joint interface and automatically guided to final position. The top part of the nacelle adapter is sliding on the top part of the tower.

**Fig. 20** shows the use of a jack-up vessel 13 during mounting a blade 5 according to an embodiment. Since the installation process of blades 5 is a more weather dependent due to safety and smaller tolerances, a conventional jack-up installation can be chosen. The blades 5 have a relatively small weight so that a relative small jack-up vessel 13 can be used, and the installation of the blades 5 can be planned in an appropriate weather window. As the jack-up vessel 13 is only used for mounting the blades 5 and floating vessels 6 are used in the other mounting processes, the entire offshore mounting of the wind turbine is less sensitive in this split technology.

Moreover, the time of using the jack-up vessel 13 is relative short as the blades 5 have a relatively small weight and the jack-up vessel 13 is not big.

**Fig. 21** shows the use of a floating vessel 6 during mounting a blade 5 according to another embodiment. In this alternative embodiment, also a floating vessel 6 can be used instead of the jack-up vessel 13 for mounting the blades 5.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A method of offshore mounting a wind turbine (1), the wind turbine (1) comprising a foundation (2), a tower (3), a nacelle (4) and a plurality of blades (5), the method comprising steps of:
a) mounting the foundation (2) on or above a sea ground (S);
b) mounting the tower (3) to the foundation (2);
c) mounting the nacelle (4) to the tower (3); and
d) mounting the plurality of blades (5) to the nacelle (4),
wherein at least one of the steps a) through c) is performed by use of at least one floating vessel (6) which is exclusively supported by buoyancy when performing the at least one of the steps a) through c),
**characterized in that**
the nacelle (4) has a first tube (8) which is mounted to the tower (3) having a second tube (9) by use of a slip-joint interface, wherein one of first and second tubes (8, 9) has a diameter which is larger than a diameter of the other one of the first and second tubes (8, 9), wherein the one of the first and second tubes (8, 9) having the larger diameter is put over and guided by the other one of the first and second tubes (8, 9);
the first tube (8) and the second tube (9) are cone-shaped; and
the nacelle (4) is exclusively secured by the slip joint interface of the cone-shaped first tube (8) and the cone-shaped second tube (9) and automatically guided to its final position to mate to the tower (3) exclusively by the cone-shaped first tube (8) and the cone-shaped second tube (9).

2. The method according to claim 1, wherein
different floating vessels (6) having different displacements are used in at least some of the steps a) through d).

3. The method according to any one of the preceding claims, further comprising a step e) of:
attaching an adaptor to the nacelle prior to step c).

4. The method according to any one of the preceding claims, further comprising a step f) of:
mounting a transition piece (TP) between the foundation (2) and the tower (3).

5. The method according to any one of the preceding claims, wherein
an array of wind turbines (1) is mounted, wherein the at least one floating vessel (6) performs only a subset of steps a) through d) for each wind turbine (1) of the array.

6. The method according to any one of the preceding claims, wherein
the floating vessel (6), which is at least used in one of steps a) to c), comprises a gripper tool (7) and/or a crane (12).

7. The method according to the preceding claim, wherein
step b) is either performed by
horizontal and vertical positioning the tower (3) by means of the gripper tool (7) or crane (12) to a position at which the tower (3) can be mounted to the foundation (2); or
moving the floating vessel (6) for horizontally positioning the tower (3) to a horizontal position at which the tower (3) can be mounted to the foundation (2), and, during maintaining the horizontal position of the floating vessel (6), vertically moving the tower (3) by means of the gripper tool (7) or crane (12) to a position at which the tower (3) can be mounted to the foundation (2).

8. The method according to the preceding claim, wherein
the gripper tool (7) or the crane (12) and the floating vessel (6) communicate which each other for:
moving the gripper tool (7) or crane (12) in a horizontal direction to compensate for a horizontal shift of the floating vessel (6); and/or
controlling a positioning system of the floating vessel (6) by the gripper tool (7) or the crane (12).

9. The method according to any one of claims 6 to 8, wherein
the foundation (2) is a floating foundation; and
the gripper tool (7) or crane (12) determines a floating vessel (6) digital position under installation and targets at a point on a floating foundation (2) to follow movements of the floating foundation (2).

10. The method according to any one of claims 6 to 8, wherein
the foundation (2) is a floating foundation; and
the gripper tool (7) holds and controls the floating foundation (2) under installation of the wind turbine (1).

11. The method according to any one of claims 6 to 8, wherein
the foundation (2) is a gravity foundation; and
the gripper tool (7) handles the gravity foundation (2) and places the same on the sea ground (S).

12. The method according to any one of the preceding claims, wherein
step a) is performed when at least the tower (3) is already mounted to the foundation (2).

## Patentansprüche

1. Verfahren zum Offshore-Montieren einer Windturbine (1), wobei die Windturbine (1) ein Fundament (2), einen Turm (3), eine Gondel (4) und eine Vielzahl von Blättern (5) umfasst, wobei das Verfahren die folgenden Schritte umfasst:
a) Montieren des Fundaments (2) auf oder über einem Meeresboden (S);
b) Montieren des Turms (3) an dem Fundament (2);
c) Montieren der Gondel (4) an dem Turm (3); und
d) Montieren der Vielzahl von Blättern (5) an der Gondel (4),
wobei mindestens einer der Schritte a) bis c) unter Verwendung mindestens eines schwimmenden Wasserfahrzeugs (6) durchgeführt wird, das beim Durchführen des mindestens einen der Schritte a) bis c) ausschließlich durch Auftrieb getragen wird,
**dadurch gekennzeichnet, dass**
die Gondel (4) ein erstes Rohr (8) aufweist, das an dem Turm (3), der ein zweites Rohr (9) aufweist, unter Verwendung einer Gleitverbindungsschnittstelle montiert wird, wobei eines von einem ersten und einem zweiten Rohr (8, 9) einen Durchmesser aufweist, der größer als ein Durchmesser des anderen von dem ersten und dem zweiten Rohr (8, 9) ist, wobei das eine von dem ersten und dem zweiten Rohr (8, 9) mit dem größeren Durchmesser über dem anderen von dem ersten und dem zweiten Rohr (8, 9) platziert und von diesem geführt wird;
das erste Rohr (8) und das zweite Rohr (9) kegelförmig sind; und
die Gondel (4) ausschließlich durch die Gleitverbindungsschnittstelle des kegelförmigen ersten Rohrs (8) und des kegelförmigen zweiten Rohrs (9) gesichert wird und automatisch in ihre Endposition geführt wird, um ausschließlich durch das kegelförmige erste Rohr (8) und das kegelförmige zweite Rohr (9) mit dem Turm (3) verbunden zu werden.

2. Verfahren nach Anspruch 1, wobei
unterschiedliche schwimmende Wasserfahrzeuge (6), die unterschiedliche Verdrängungen aufweisen, in mindestens einigen der Schritte a) bis d) verwendet werden.

3. Verfahren nach einem der vorhergehenden Ansprüche, ferner umfassend einen folgenden Schritt e):
Befestigen eines Adapters an der Gondel vor Schritt c).

4. Verfahren nach einem der vorhergehenden Ansprüche, ferner umfassend einen folgenden Schritt f):
Montieren eines Übergangsstücks (TP) zwischen dem Fundament (2) und dem Turm (3).

5. Verfahren nach einem der vorhergehenden Ansprüche, wobei
eine Anordnung von Windturbinen (1) montiert wird, wobei das mindestens eine schwimmende Wasserfahrzeug (6) nur eine Teilmenge der Schritte a) bis d) für jede Windturbine (1) der Anordnung durchführt.

6. Verfahren nach einem der vorhergehenden Ansprüche, wobei
das schwimmende Wasserfahrzeug (6), das mindestens in einem der Schritte a) bis c) verwendet wird, ein Greifwerkzeug (7) und/oder einen Kran (12) umfasst.

7. Verfahren nach dem vorhergehenden Anspruch, wobei
Schritt b) durchgeführt wird durch entweder
horizontales und vertikales Positionieren des Turms (3) mittels des Greifwerkzeugs (7) oder des Krans (12) in einer Position, in welcher der Turm (3) an dem Fundament (2) montiert werden kann; oder
Bewegen des schwimmenden Wasserfahrzeugs (6) zum horizontalen Positionieren des Turms (3) in einer horizontalen Position, in welcher der Turm (3) an dem Fundament (2) montiert werden kann, und während Beibehaltens der horizontalen Position des schwimmenden Wasserfahrzeugs (6), vertikales Bewegen des Turms (3) mittels des Greifwerkzeugs (7) oder des Krans (12) in eine Position, in welcher der Turm (3) an dem Fundament (2) montiert werden kann.

8. Verfahren nach dem vorhergehenden Anspruch, wobei
das Greifwerkzeug (7) oder der Kran (12) und das schwimmende Wasserfahrzeug (6) zum Folgenden miteinander kommunizieren:
Bewegen des Greifwerkzeugs (7) oder des Krans (12) in einer horizontalen Richtung, um eine horizontale Verschiebung des schwimmenden Wasserfahrzeugs (6) zu kompensieren; und/oder
Steuern eines Positionierungssystems des schwimmenden Wasserfahrzeugs (6) durch das Greifwerkzeug (7) oder den Kran (12).

9. Verfahren nach einem der Ansprüche 6 bis 8, wobei
das Fundament (2) ein Schwimmfundament ist; und
das Greifwerkzeug (7) oder der Kran (12) eine digitale Position des schwimmenden Wasserfahrzeugs (6) während der Installation bestimmt und auf einen Punkt auf einem Schwimmfundament (2) abzielt, um Bewegungen des Schwimmfundaments (2) zu folgen.

10. Verfahren nach einem der Ansprüche 6 bis 8, wobei
das Fundament (2) ein Schwimmfundament ist; und
das Greifwerkzeug (7) das Schwimmfundament (2) während der Installation der Windturbine (1) hält und steuert.

11. Verfahren nach einem der Ansprüche 6 bis 8, wobei
das Fundament (2) ein Schwergewichtsfundament ist; und
das Greifwerkzeug (7) das Schwerkraftfundament (2) handhabt und dieses auf dem Meeresboden (S) platziert.

12. Verfahren nach einem der vorhergehenden Ansprüche, wobei
Schritt a) durchgeführt wird, wenn mindestens der Turm (3) bereits an dem Fundament (2) montiert ist.

## Revendications

1. Procédé de montage en mer d'une éolienne (1), l'éolienne (1) comprenant une fondation (2), une tour (3), une nacelle (4) et une pluralité de pales (5), le procédé comprenant les étapes consistent à :
a) monter la fondation (2) sur ou au-dessus d'un sol marin (S) ;
b) monter la tour (3) sur la fondation (2) ;
c) monter la nacelle (4) sur la tour (3) ; et
d) monter la pluralité de pales (5) sur la nacelle (4),
dans lequel au moins l'une des étapes a) à c) est réalisée en utilisant au moins un navire flottant (6) qui est exclusivement supporté par la flottabilité lors de la réalisation de l'au moins une des étapes a) à c),
**caractérisé en ce que**
la nacelle (4) a un premier tube (8) qui est monté sur la tour (3) ayant un deuxième tube (9) à l'aide d'une interface de joint coulissant, dans lequel l'un des premier et deuxième tubes (8, 9) a un diamètre qui est supérieur à un diamètre de l'autre des premier et deuxième tubes (8, 9), dans lequel l'un des premier et deuxième tubes (8, 9) ayant le plus grand diamètre est placé et guidé par l'autre des premier et deuxième tubes (8, 9) ;
le premier tube (8) et le deuxième tube (9) sont en forme de cône ; et
la nacelle (4) est fixée exclusivement par l'interface de joint coulissant du premier tube en forme de cône (8) et du deuxième tube en forme de cône (9) et guidée automatiquement vers sa position finale pour s'accoupler à la tour (3) exclusivement par le premier tube en forme de cône (8) et le deuxième tube en forme de cône (9).

2. Procédé selon la revendication 1, dans lequel
différents navires flottants (6) ayant des déplacements différents sont utilisés dans au moins certaines des étapes a) à d).

3. Procédé selon l'une quelconque des revendications précédentes, comprenant en outre une étape e) consistant à :
fixer un adaptateur à la nacelle avant l'étape c).

4. Procédé selon l'une quelconque des revendications précédentes, comprenant en outre une étape f) consistant à :
monter une pièce de transition (TP) entre la fondation (2) et la tour (3).

5. Procédé selon l'une quelconque des revendications précédentes, dans lequel
un réseau d'éoliennes (1) est monté, dans lequel l'au moins un navire flottant (6) effectue uniquement un sous-ensemble des étapes a) à d) pour chaque éolienne (1) du réseau.

6. Procédé selon l'une quelconque des revendications précédentes, dans lequel
le navire flottant (6), qui est au moins utilisé dans l'une des étapes a) à c), comprend un outil de préhension (7) et/ou une grue (12).

7. Procédé selon la revendication précédente, dans lequel
l'étape b) est soit réalisée par
le positionnement horizontal et vertical de la tour (3) au moyen de l'outil de préhension (7) ou de la grue (12) à une position à laquelle la tour (3) peut être montée sur la fondation (2) ; ou
le déplacement du navire flottant (6) pour positionner horizontalement la tour (3) vers une position horizontale à laquelle la tour (3) peut être montée sur la fondation (2), et, pendant le maintien de la position horizontale du navire flottant (6), déplacer verticalement la tour (3) au moyen de l'outil de préhension (7) ou de la grue (12) vers une position à laquelle la tour (3) peut être montée sur la fondation (2).

8. Procédé selon la revendication précédente, dans lequel
l'outil de préhension (7) ou la grue (12) et le navire flottant (6) communiquent entre eux pour :
le déplacement de l'outil de préhension (7) ou de la grue (12) dans une direction horizontale pour compenser un déplacement horizontal du navire flottant (6) ; et/ou
la commande d'un système de positionnement du navire flottant (6) par l'outil de préhension (7) ou la grue (12).

9. Procédé selon l'une quelconque des revendications 6 à 8, dans lequel
la fondation (2) est une fondation flottante; et
l'outil de préhension (7) ou la grue (12) détermine une position numérique de navire flottant (6) en cours d'installation et cible en un point sur une fondation flottante (2) pour suivre les mouvements de la fondation flottante (2).

10. Procédé selon l'une quelconque des revendications 6 à 8, dans lequel
la fondation (2) est une fondation flottante; et
l'outil de préhension (7) maintient et commande la fondation flottante (2) lors de l'installation de l'éolienne (1).

11. Procédé selon l'une quelconque des revendications 6 à 8, dans lequel
la fondation (2) est une fondation gravitaire ; et
l'outil de préhension (7) manipule la fondation gravitaire (2) et la place sur le sol marin (S).

12. Procédé selon l'une quelconque des revendications précédentes, dans lequel
l'étape a) est réalisée lorsqu'au moins la tour (3) est déjà montée sur la fondation (2).
